(19) Europäisches Patentamt
European Patent Office
Office européen des brevets

(11) **EP 3 398 394 B1**

(12) **FASCICULE DE BREVET EUROPEEN**

(45) Date de publication et mention de la délivrance du brevet:
**19.02.2020 Bulletin 2020/08**

(21) Numéro de dépôt: **16822691.8**

(22) Date de dépôt: **27.12.2016**

(51) Int Cl.:
***H04W 74/08*** *(2009.01)*

(86) Numéro de dépôt international:
**PCT/EP2016/082712**

(87) Numéro de publication internationale:
**WO 2017/114830 (06.07.2017 Gazette 2017/27)**

(54) **PROCÉDÉ D'ÉMISSION D'UN MESSAGE APRÈS ÉCOUTE D'UN CANAL DE COMMUNICATION PARTAGÉ PAR DES TERMINAUX**

VERFAHREN ZUM SENDEN EINER NACHRICHT NACH DEM ANHÖREN AN EINEN VON ENDGERÄTEN GEMEINSAM GENUTZTEN KOMMUNIKATIONSKANAL

METHOD OF SENDING A MESSAGE AFTER LISTENING TO A COMMUNICATION CHANNEL SHARED BY TERMINALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.12.2015 FR 1563386**

(43) Date de publication de la demande:
**07.11.2018 Bulletin 2018/45**

(73) Titulaire: **SIGFOX**
**31670 Labège (FR)**

(72) Inventeurs:
- **JELOYAN, Christophe**
  **31200 Toulouse (FR)**
- **BERTAUX, Lionel**
  **31250 Revel (FR)**

(74) Mandataire: **Ipside**
**6, Impasse Michel Labrousse**
**31100 Toulouse (FR)**

(56) Documents cités:
**WO-A1-2012/040520    US-A1- 2015 124 785**

- **"802.11-2012 ; 802.11-2012", IEEE DRAFT; 802.11-2012, IEEE-SA, PISCATAWAY, NJ USA, vol. 802.11, 18 avril 2012 (2012-04-18), pages 1-2792, XP017697837,**
- **"ETSI EN 301 893 v1.8.1; Broadband Radio Access Networks (BRAN); 5 GHz high performance RLAN; Harmonized EN covering essential requirements of article 3.2 of the R&TTE Directive", , 20 mars 2015 (2015-03-20), pages 1-93, XP055265728, Extrait de l'Internet: URL:http://www.etsi.org/deliver/etsi_en/30 1800_301899/301893/01.08.01_60/en_301893v0 10801p.pdf [extrait le 2016-04-15]**

**Description**

## DOMAINE TECHNIQUE

La présente invention appartient au domaine des systèmes de communication sans fil. Plus particulièrement, la présente invention concerne un procédé d'émission d'un message par un terminal, dans le cas où le message doit être émis sur un canal de communication partagé avec d'autres terminaux, et dans le cas où chaque terminal doit vérifier la disponibilité dudit canal de communication avant d'émettre un message.

## ÉTAT DE LA TECHNIQUE

Dans de nombreux systèmes de communication sans fil, il est en effet nécessaire d'écouter le canal de communication, afin d'en vérifier la disponibilité, avant d'émettre un message sur ledit canal de communication.

C'est le cas notamment pour les systèmes de communication sans fil qui utilisent des bandes de fréquences dites libres en ce qu'elles peuvent être utilisées sans autorisation administrative préalable, sous réserve de respecter des contraintes réglementaires. Ces contraintes réglementaires comportent en effet, dans certaines zones géographiques, l'obligation d'écouter avant d'émettre (« Listen Before Talk » ou LBT dans la littérature anglo-saxonne).

Dans de tels systèmes de communication sans fil, il n'est donc possible d'émettre un message que si aucune activité n'a été détectée sur ledit canal de communication pendant une durée prédéterminée, dite « durée d'inactivité ». Par exemple, au Japon, la durée d'inactivité à détecter avant d'émettre un message doit être d'au moins 5 millisecondes (ms).

Dans les systèmes de communication sans fil actuels, un terminal qui souhaite émettre un message sur un tel canal de communication commence donc par écouter ledit canal de communication. Si le canal de communication est occupé, ou si une activité est détectée avant que ladite durée d'inactivité n'ait pu être observée, le terminal peut interrompre immédiatement l'écoute, et réessayer ultérieurement d'écouter ledit canal de communication après expiration d'une durée prédéterminée, dite « durée de report d'écoute ». Le terminal peut aussi prolonger l'écoute jusqu'à détecter une absence d'activité sur le canal de communication pendant ladite durée d'inactivité. Dès qu'une absence d'activité d'une durée égale à ladite durée d'inactivité a été détectée, le terminal peut émettre le message.

L'utilisation de bandes de fréquences libres est particulièrement avantageuse dans le cas d'applications du type M2M (acronyme anglo-saxon pour « Machine-to-Machine ») ou du type « Internet des objets » (« Internet of Things » ou IoT dans la littérature anglo-saxonne), car elle permet de réduire les coûts de mise de tels systèmes de communication sans fil.

Dans le contexte par exemple de l'IoT, chaque objet de la vie de tous les jours a vocation à devenir un objet communicant, et est à cet effet équipé d'un terminal adapté à émettre des messages à destination d'un réseau d'accès. Ainsi, dans un tel contexte, il est tout à fait possible qu'un très grand nombre de terminaux, typiquement supérieur à 100 voire davantage, partage un même canal de communication.

Un problème des techniques connues d'écoute avant émission réside dans le fait que, dans le cas d'un grand nombre de terminaux partageant le même canal de communication, il peut s'avérer difficile d'accéder au canal de communication. En effet, la probabilité d'avoir un terminal qui émet un message à un instant où un autre terminal écoute le canal de communication augmente avec le nombre de terminaux, de sorte que les terminaux passent beaucoup de temps à attendre que le canal de communication soit libre.

En outre, le fait qu'il suffit qu'au moins un terminal émette un message dans le canal de communication pour que celui-ci soit considéré comme occupé, indépendamment de la faculté éventuelle des terminaux à utiliser ledit canal de communication sans interférer entre eux, conduit à une utilisation peu efficace dudit canal de communication.

Les documents WO 2012/040520 A1 et US 2015/124785 A1 donnent des exemples de l'art antérieur.

## EXPOSÉ DE L'INVENTION

La présente invention a pour objectif de remédier à tout ou partie des limitations des solutions de l'art antérieur, notamment celles exposées ci-avant, en proposant une solution qui permette d'améliorer l'efficacité d'utilisation d'un canal de communication partagé par un grand nombre de terminaux, dans le cas où un terminal doit écouter le canal de communication avant d'émettre.

A cet effet, et selon un premier aspect, l'invention concerne un procédé d'émission, par un terminal d'un système de communication sans fil, d'un message sur un canal de communication partagé avec d'autres terminaux, ledit procédé comportant :

- avant d'émettre ledit message : une étape d'écoute sans interruption du canal de communication par ledit terminal jusqu'à détecter une absence d'activité sur le canal de communication pendant une durée prédéterminée, dite « durée d'inactivité $\Delta T_{in}$ »,
- lorsqu'aucune activité n'est détectée sur ledit canal de communication pendant la durée d'inactivité $\Delta T_{in}$ : une étape d'émission dudit message sur le canal de communication.

En outre, les terminaux sont multiplexés en fréquences et/ou par différents codes d'étalement sur ledit canal de communication et, après avoir détecté une absence d'activité sur le canal de communication pendant la durée d'inactivité $\Delta T_{in}$, ledit procédé comporte une étape d'attente, pendant une durée prédéterminée identique pour tous les terminaux du système de communication sans fil, dite « durée d'attente ΔTat », avant d'émettre le message.

Ainsi, contrairement à certaines techniques d'écoute de l'art antérieur, le terminal, lorsqu'il écoute le canal de communication, n'interrompt pas l'écoute si une activité est détectée sur ledit canal de communication. Au contraire, le terminal prolonge l'écoute, bien que le canal de communication soit occupé, jusqu'à détecter une absence d'activité sur ledit canal de communication de durée égale à ladite durée d'inactivité ΔTin, de sorte que la durée de l'écoute est alors supérieure à la durée d'inactivité ΔTin.

Par conséquent, lorsque le canal de communication est initialement occupé, le fait de prolonger l'écoute permet de détecter l'instant de fin de l'activité en cours sur ledit canal de communication, et donc de détecter au plus tôt, après la fin de l'activité en cours, une absence d'activité de durée égale à la durée d'inactivité ΔTin.

Le procédé d'émission permet donc d'améliorer l'efficacité d'utilisation du canal de communication grâce au fait qu'il est possible d'émettre un message au plus près de la fin d'activité sur le canal de communication, tout en respectant la contrainte de détecter préalablement une absence d'activité de durée égale à la durée d'inactivité ΔTin.

L'efficacité de l'utilisation du canal de communication est également améliorée par le fait que les terminaux qui ont un message à émettre vont avoir tendance à émettre simultanément leurs messages respectifs, puisque d'une part ils détecteront la fin d'activité sensiblement au même instant, de sorte qu'ils détecteront également une absence d'activité de durée égale à la durée d'inactivité ΔTin sensiblement au même moment, et d'autre part la durée d'attente ΔTat est identique pour tous les terminaux du système de communication. Toutefois, les terminaux étant multiplexés en fréquences et/ou par différents codes d'étalement sur ledit canal de communication, aucune collision ne se produit et les messages émis simultanément par lesdits terminaux n'interfèrent pas entre eux.

Le fait de retarder l'émission du message d'une durée égale à la durée d'attente ΔTat est avantageux car cela permet d'augmenter le nombre de terminaux susceptibles d'émettre, et ainsi de favoriser davantage l'émission simultanée de messages par différents terminaux.

La durée d'attente ΔTat est identique pour tous les terminaux du système de communication car elle ne vise pas à étaler les émissions de messages des différents terminaux au cours du temps, mais bien à favoriser l'émission simultanée de messages par un plus grand nombre de terminaux.

Un autre avantage de l'utilisation de la durée d'attente ΔTat est qu'elle permet de corriger un problème lié aux délais de propagation qui fait que le terminal le plus proche du terminal qui occupe le canal de communication aura tendance à détecter en premier que le canal est libre, et pourrait potentiellement empêcher les autres terminaux d'émettre.

Par conséquent, le procédé d'émission permet de respecter la contrainte d'écoute avant émission tout en optimisant l'occupation dudit canal de communication en favorisant l'émission simultanée de plusieurs messages.

Dans des modes particuliers de mise en œuvre, le procédé d'émission peut comporter en outre l'une ou plusieurs des caractéristiques suivantes, prises isolément ou selon toutes les combinaisons techniquement possibles.

Dans des modes particuliers de mise en œuvre, le terminal interrompt l'écoute du canal de communication lorsqu'aucune absence d'activité de durée égale à la durée d'inactivité ΔTin n'est détectée pendant une durée prédéterminée, dite « durée maximale d'écoute ΔTmax », la durée maximale d'écoute ΔTmax étant significativement supérieure à la durée d'inactivité ΔTin, c'est-à-dire que la durée maximale d'écoute ΔTmax est au moins cinq fois supérieure à la durée d'inactivité ΔTin ($\Delta Tmax \geq 5 \cdot \Delta Tin$), et de préférence au moins dix fois supérieure à ladite durée d'inactivité ΔTin ($\Delta Tmax \geq 10 \cdot \Delta Tin$).

Ainsi, si au cours de l'étape d'écoute, aucune absence d'activité de durée égale à la durée d'inactivité ΔTin n'est détectée pendant la durée maximale d'écoute ΔTmax, le terminal finit par interrompre l'écoute. De telles dispositions permettent notamment d'éviter d'écouter en permanence le canal de communication dans le cas où celui-ci serait occupé en permanence par une source d'interférences ne respectant pas les contraintes règlementaires.

Dans des modes particuliers de mise en œuvre, la durée maximale d'écoute ΔTmax est supérieure à une durée maximale ΔTmsg des messages émis par les terminaux du système de communication sans fil, et de préférence ΔTmax est supérieure à ($\Delta Tmsg + 2 \times \Delta Tin + \Delta Tat$).

Dans des modes particuliers de mise en œuvre, la durée maximale d'écoute ΔTmax est égale ou supérieure à 2 secondes.

Dans des modes particuliers de mise en œuvre, la durée d'attente ΔTat est égale ou supérieure à la durée d'inactivité ΔTin.

Dans des modes particuliers de mise en œuvre, le message à émettre par le terminal est un message à bande ultra étroite.

Dans des modes particuliers de mise en œuvre, l'émission du message comporte la sélection de manière aléatoire, par ledit terminal, d'une fréquence centrale d'émission dudit message à l'intérieur d'une bande fréquentielle partagée avec les autres terminaux.

Dans des modes particuliers de mise en œuvre, l'émission du message comporte l'étalement du spectre dudit message au moyen d'un code d'étalement prédéterminé.

Selon un second aspect, la présente invention concerne un terminal d'un système de communication sans fil, comportant des moyens configurés pour mettre en œuvre les étapes d'un procédé d'émission selon l'un quelconque des modes de mise en œuvre de l'invention.

Selon un troisième aspect, la présente invention concerne un système de communication sans fil comportant une pluralité de terminaux selon l'un quelconque des modes de réalisation de l'invention.

Dans des modes particuliers de réalisation, le système de communication sans fil comporte un réseau d'accès comportant une pluralité de stations de base, le canal de communication correspondant à un lien montant depuis les terminaux vers ledit réseau d'accès.

L'invention est définie par les revendications annexées.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un exemple de réalisation d'un système de communication sans fil,
- Figure 2 : un diagramme illustrant un exemple de mise en œuvre d'un procédé d'émission,
- Figure 3 : un diagramme illustrant une variante de mise en œuvre d'un procédé d'émission,
- Figure 4 : un diagramme illustrant un mode préféré de mise en œuvre d'un procédé d'émission,
- Figure 5 : des diagrammes temporels illustrant le fonctionnement d'un procédé d'émission selon l'invention.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

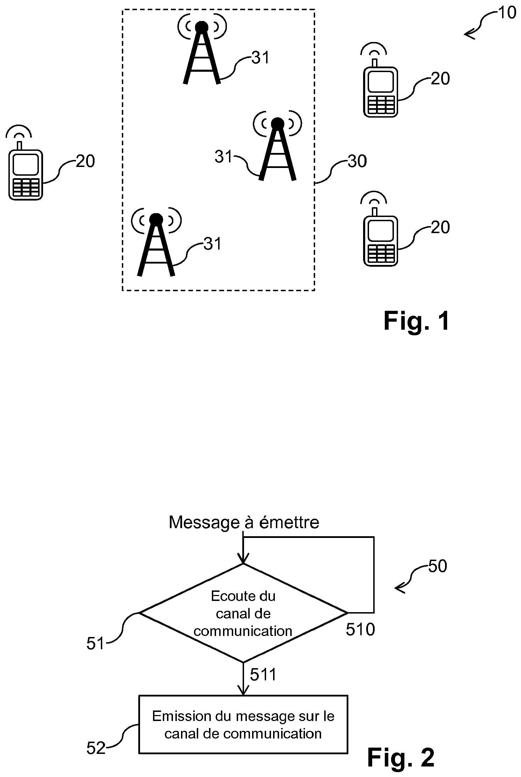

La figure 1 représente schématiquement un exemple de réalisation d'un système 10 de communication sans fil. Dans l'exemple illustré par la figure 1, le système 10 de communication sans fil comporte plusieurs terminaux 20 et un réseau d'accès 30 comportant une pluralité de stations de base 31.

Les terminaux 20 et les stations de base 31 du réseau d'accès 30 échangent des données sous la forme de signaux radioélectriques. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz).

Dans la suite de la description, on se place de manière non limitative dans le cas où les échanges de données entre les terminaux 20 et les stations de base 31 sont essentiellement unidirectionnels, en l'occurrence sur un lien montant depuis les terminaux 20 vers le réseau d'accès 30. Rien n'exclut cependant, suivant d'autres exemples, d'avoir un système 10 de communication sans fil bidirectionnel, dans lequel il est également possible d'avoir des échanges de données sur un lien descendant depuis le réseau d'accès 30 vers les terminaux 20.

Le lien montant entre les terminaux 20 et les stations de base 31 du réseau d'accès 30 correspond à un canal de communication partagé par lesdits terminaux 20. Plus particulièrement, le canal de communication correspond à une bande fréquentielle prédéterminée, par exemple de largeur égale à 200 kilohertz (kHz), dans laquelle chaque terminal 20 est autorisé à émettre un message comportant des données.

Dans la suite de la description, on se place de manière non limitative dans le cas où les terminaux 20 sont multiplexés en fréquences sur le canal de communication (« Frequency Division Multiple Access » ou FDMA dans la littérature anglo-saxonne).

En outre, on se place de manière non limitative dans le cas où le système 10 de communication sans fil est à bande ultra étroite. Par « bande ultra étroite » (« Ultra Narrow Band » ou UNB dans la littérature anglo-saxonne), on entend que le spectre fréquentiel instantané des messages émis par les terminaux 20 est de largeur fréquentielle inférieure à deux kilohertz, voire inférieure à un kilohertz. L'émission de tels messages peut être réalisée avec une consommation électrique très réduite, particulièrement adaptée pour des applications du type M2M ou IoT.

De plus, de tels messages à bande ultra étroite se prêtent particulièrement bien à un multiplexage en fréquences des différents terminaux 20 sur le canal de communication.

Par exemple, il est possible d'associer préalablement, une fréquence centrale d'émission de messages à chaque terminal 20, les fréquences centrales d'émission respectives des différents terminaux 20 étant différentes entre elles et invariantes au cours du temps. Par exemple, si le canal de communication correspond à une bande de fréquences de largeur égale à 200 kHz, il est possible, dans le cas de messages à bande ultra étroite, de multiplexer entre 100 et 200 terminaux 20 dans ladite bande de fréquences, sans que les messages émis par lesdits terminaux 20 n'interfèrent entre eux.

Alternativement, dans des modes préférés de réalisation, chaque terminal 20 du système 10 de communication sans fil est configuré pour sélectionner, de manière aléatoire, une fréquence centrale d'émission du message à émettre, à l'intérieur de la bande de fréquences partagée. Par conséquent, la fréquence centrale d'émission, pour un même terminal 20, varie au cours du temps, de préférence à chaque fois qu'un message doit être émis.

De telles dispositions sont avantageuses en ce qu'elles permettent de réaliser statistiquement, sans coordination entre les terminaux 20 et les stations de base 31 du réseau d'accès 30, un multiplexage en fréquences des terminaux 20 sur le canal de communication. La complexité repose par contre sur le réseau d'accès 30, qui doit être capable de recevoir des messages émis, sur ledit canal de communication, sur des fréquences centrales d'émission arbitraires non connues a priori dudit réseau d'accès 30.

En outre, du fait que la fréquence centrale d'émission de chaque terminal 20 varie au cours du temps, la communication entre chaque terminal 20 et le réseau d'accès 30 est moins sensible à la présence d'une source d'interférences émettant un signal parasite sur une fréquence centrale d'émission invariante au cours du temps, et occupant une partie seulement de la bande de fréquences partagée par lesdits terminaux 20.

La figure 2 représente schématiquement les principales étapes d'un procédé 50 d'émission d'un message sur le canal de communication partagé par les différents terminaux 20 du système 10 de communication sans fil.

Le procédé 50 d'émission est mis en œuvre par chaque terminal 20 dudit système 10 de communication sans fil.

A cet effet, chaque terminal 20 comporte notamment un dispositif de contrôle (non représenté sur les figures), comportant par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre les différentes étapes du procédé 50 d'émission. Alternativement ou en complément, le dispositif de contrôle comporte un ou des circuits logiques programmables (FPGA, PLD, etc.), et/ou un ou des circuits intégrés spécialisés (ASIC), et/ou un ensemble de composants électroniques discrets, etc., adaptés à mettre en œuvre tout ou partie desdites étapes du procédé 50 d'émission.

Chaque terminal 20 comporte en outre des moyens de communication sans fil, considérés comme connus de l'homme de l'art, permettant audit terminal d'émettre des messages montants à destination des stations de base 31 du réseau d'accès 30.

En d'autres termes, le terminal 20 comporte un ensemble de moyens configurés de façon logicielle (produit programme d'ordinateur spécifique) et/ou matérielle (FPGA, PLD, ASIC, composants électroniques discrets, etc.) pour mettre en œuvre les étapes du procédé 50 d'émission.

Tel qu'indiqué précédemment, un terminal 20 doit, avant d'émettre un message sur le canal de communication, écouter ledit canal de communication pour vérifier qu'il n'est pas occupé.

Ainsi, tel qu'illustré par la figure 2, lorsque le terminal 20 a un message à émettre, le procédé 50 d'émission comporte, avant d'émettre ledit message, une étape 51 d'écoute du canal de communication par ledit terminal 20.

Le canal de communication est considéré comme n'étant pas occupé si aucune activité n'est détectée sur ledit canal de communication pendant une durée prédéterminée, dite « durée d'inactivité ΔTin ». La durée d'inactivité ΔTin peut notamment dépendre des contraintes réglementaires en vigueur dans la zone géographique couverte par le système 10 de communication sans fil, et est par exemple égale ou supérieure à 5 ms.

Par « activité sur le canal de communication », on entend aussi bien une émission en cours d'un message par un autre terminal 20 du système 10 de communication sans fil, qu'une émission par un équipement tiers, n'appartenant pas audit système 10 de communication sans fil. Il est à noter que toute méthode de détection d'activité connue de l'homme de l'art peut être mise en œuvre, et le choix d'une méthode particulière ne constitue qu'une variante d'implémentation de l'invention.

Si, au cours de l'étape 51 d'écoute, une activité est détectée avant d'avoir pu détecter une absence d'activité, sur ledit canal de communication, de durée égale à ladite durée d'inactivité ΔTin (référence 510 sur la figure 2), alors l'exécution de l'étape 51 d'écoute se poursuit.

Par contre, si une absence d'activité de durée égale à la durée d'inactivité ΔTin est détectée (référence 511 sur la figure 2), alors le canal de communication est considéré comme n'étant pas occupé. Le procédé 50 d'émission comporte alors une étape 52 d'émission dudit message.

En d'autres termes, le terminal 20 écoute le canal de communication sans interruption jusqu'à détecter une absence d'activité sur ledit canal de communication de durée égale à ladite durée d'inactivité ΔTin.

Si, lorsqu'un terminal 20 doit émettre un message et commence à écouter le canal de communication, une activité est détectée sur le canal de communication, alors le terminal 20 écoutera le canal de communication jusqu'à l'instant de fin de l'activité en cours sur ledit canal de communication. Ainsi, le terminal 20 pourra émettre au plus près de l'instant de fin d'activité, puisque la mesure de la durée d'inactivité ΔTin débute immédiatement après que l'activité en cours sur le canal de communication a cessé.

En outre, un tel comportement des terminaux 20 va permettre de favoriser l'émission simultanée de plusieurs messages, par des terminaux 20 différents, après qu'une activité en cours sur le canal de communication a cessé. En effet, des terminaux 20 qui ont un message à émettre et qui commencent à écouter le canal de communication au cours d'une même période d'activité sur le canal de communication, commenceront la mesure de la durée d'inactivité ΔTin sensiblement au même instant, immédiatement après que l'activité en cours sur le canal de communication a cessé. Etant donné que les terminaux 20 sont, dans l'exemple considéré, multiplexés en fréquences, les messages émis simultanément n'interfèrent pas entre eux.

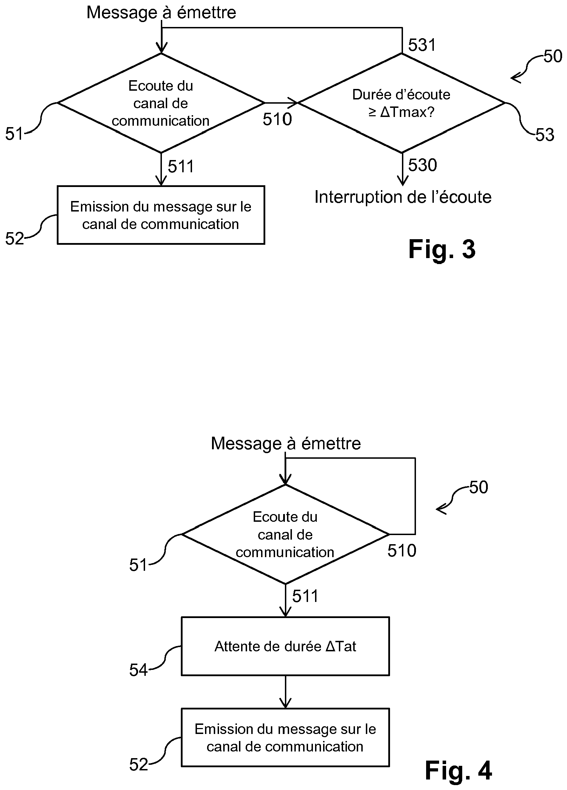

La figure 3 représente schématiquement les principales étapes d'une variante de mise en œuvre d'un procédé 50 d'émission.

Outre les étapes décrites en référence à la figure 2, le procédé 50 d'émission comporte une étape 53 de détermination si la durée d'écoute du canal de communication a dépassé une durée prédéterminée, dite « durée maximale d'écoute ΔTmax ».

Si la durée d'écoute a dépassé la durée maximale d'écoute ΔTmax sans détecter d'absence d'activité de durée égale à la durée d'inactivité ΔTin (référence 530 sur la figure 3) alors le terminal 20 interrompt l'écoute du canal de communication. Dans un tel cas, le terminal 20 peut réessayer ultérieurement d'écouter le canal de communication, par exemple après expiration d'une durée prédéterminée, dite « durée de report d'écoute ΔTr ». La durée de report d'écoute ΔTr est par exemple comprise entre quelques centaines de millisecondes et quelques secondes. En outre, il est également possible d'annuler l'émission du message après un nombre prédéfini de d'écoutes interrompues, ou encore à l'expiration d'une durée maximale prédéterminée, par exemple de l'ordre de quelques centaines de secondes.

Par contre, si la durée d'écoute n'a pas dépassé la durée maximale d'écoute ΔTmax (référence 531 sur la figure 3), l'écoute du canal de communication se poursuit sans interruption.

En d'autres termes, le terminal 20 écoute le canal de communication, sans interruption, tant qu'aucune absence d'activité de durée égale à la durée d'inactivité ΔTin n'a été détectée, dans la limite toutefois que la durée d'écoute ne peut pas dépasser la durée maximale d'écoute ΔTmax. De telles dispositions permettent notamment d'éviter d'écouter en permanence le canal de communication dans le cas où celui-ci serait occupé en permanence par une source d'interférences ne respectant pas les contraintes réglementaires.

De préférence, la durée maximale d'écoute ΔTmax est significativement supérieure à la durée d'inactivité Δtin, c'est-à-dire au moins cinq fois supérieure à ladite durée d'inactivité ΔTin.

En effet, plus la durée maximale d'écoute ΔTmax est importante, et plus il sera possible, pour un grand nombre de terminaux 20 ayant un message à émettre, de détecter l'instant de fin d'une activité en cours sur le canal de communication. Par conséquent, plus la durée maximale d'écoute ΔTmax augmente et plus le nombre de terminaux 20 susceptibles d'émettre simultanément des messages est important. Dans le cas où la durée d'inactivité ΔTin est égale à 5 ms, la durée maximale d'écoute est par exemple égale ou supérieure à 500 ms, voire égale ou supérieure à 2 secondes.

Dans des modes préférés de mise en œuvre, la durée maximale d'écoute ΔTmax est supérieure à une durée maximale ΔTmsg des messages émis par les terminaux 20 du système de communication sans fil, et de préférence ΔTmax est supérieure à (ΔTmsg + 2 x ΔTin + ΔTat). Dans un tel cas, chaque terminal 20 écoutera toujours le canal de communication suffisamment longtemps pour détecter une absence d'activité de durée égale à la durée d'inactivité ΔTin après une activité en cours, si toutefois cette activité correspond à un message émis par un terminal 20 dudit système 10 de communication sans fil.

La figure 4 représente schématiquement les principales étapes d'un mode préféré de mise en œuvre d'un procédé 50 d'émission.

Tel qu'illustré par la figure 4, le procédé 50 d'émission reprend les étapes décrites en référence à la figure 2. Dans l'exemple non limitatif illustré par la figure 4, le procédé 50 d'émission ne reprend pas l'étape 53, décrite en référence à la figure 3, de détermination si la durée d'écoute a dépassé la durée maximale d'écoute ΔTmax. Rien n'exclut cependant, suivant d'autres exemples, de reprendre également l'étape 53 de détermination si la durée d'écoute a dépassé la durée maximale d'écoute ΔTmax.

Tel qu'illustré par la figure 4, le procédé 50 d'émission comporte, après avoir détecté une absence d'activité sur le canal de communication de durée égale à la durée d'inactivité ΔTin, une étape 54 d'attente, pendant une durée prédéterminée, dite « durée d'attente ΔTat », avant d'émettre le message.

En d'autres termes, après avoir détecté une absence d'activité sur le canal de communication de durée égale à la durée d'inactivité ΔTin, le terminal 20 retarde l'émission du message d'une durée égale à la durée d'attente ΔTat.

De telles dispositions sont avantageuses en ce qu'elles permettent de favoriser davantage l'émission simultanée de messages par différents terminaux 20. En effet, un terminal 20 qui a commencé à écouter le canal de communication alors qu'une activité était en cours tendra à émettre son message à un instant qui correspond à :

$$Tfin + \Delta Tin + \Delta Tat$$

expression dans laquelle Tfin correspond à l'instant de fin de l'activité détectée par ledit terminal 20. Par conséquent, un terminal 20 qui commencerait à écouter entre l'instant Tfin et l'instant (Tfin + ΔTat) pourra détecter une absence d'activité de durée égale à la durée d'inactivité ΔTin, et déclencher l'émission d'un message, ce qui n'aurait pas été le cas si le terminal 20, qui a commencé à écouter le canal de communication alors qu'une activité était en cours, émettait son message directement à l'instant (Tfin + ΔTin).

Il est à noter que la durée d'attente ΔTat ne vise qu'à retarder l'émission du message, ladite émission ayant été décidée à l'instant Tfin. Ainsi, une activité qui débuterait après l'instant Tfin ne remet pas en cause l'émission du message par le terminal 20, de sorte qu'il n'est pas nécessaire d'écouter le canal de communication après l'instant Tfin et pendant la durée d'attente ΔTat.

Avantageusement, la durée d'attente ΔTat est la même pour tous les terminaux 20 du système 10 de communication sans fil. En effet, la durée d'attente ΔTat ne vise pas à étaler les émissions de messages des différents terminaux 20 au cours du temps, pour éviter que ceux-ci soient émis simultanément. La durée d'attente ΔTat vise uniquement à prolonger l'inactivité sur le canal de communication pour favoriser l'émission simultanée de messages par un plus grand nombre de terminaux 20. Par exemple, la durée d'attente ΔTat est égale ou supérieure à la durée d'inactivité ΔTin.

Un autre avantage de l'utilisation de la durée d'attente ΔTat est qu'elle permet de corriger un problème lié aux délais de propagation qui fait que le terminal le plus proche du terminal qui occupe le canal de communication aura tendance à détecter en premier que le canal de communication est libre, et pourrait empêcher d'autres terminaux d'émettre. En effet, sans la durée d'attente ΔTat, le terminal le plus proche pourrait potentiellement commencer à émettre, et donc occuper le canal de communication, avant même qu'un autre terminal plus éloigné n'ait pu détecter une absence d'activité de durée égale à la durée d'inactivité ΔTin, ce qui empêcherait cet autre terminal de pouvoir émettre en même temps que le terminal le plus proche.

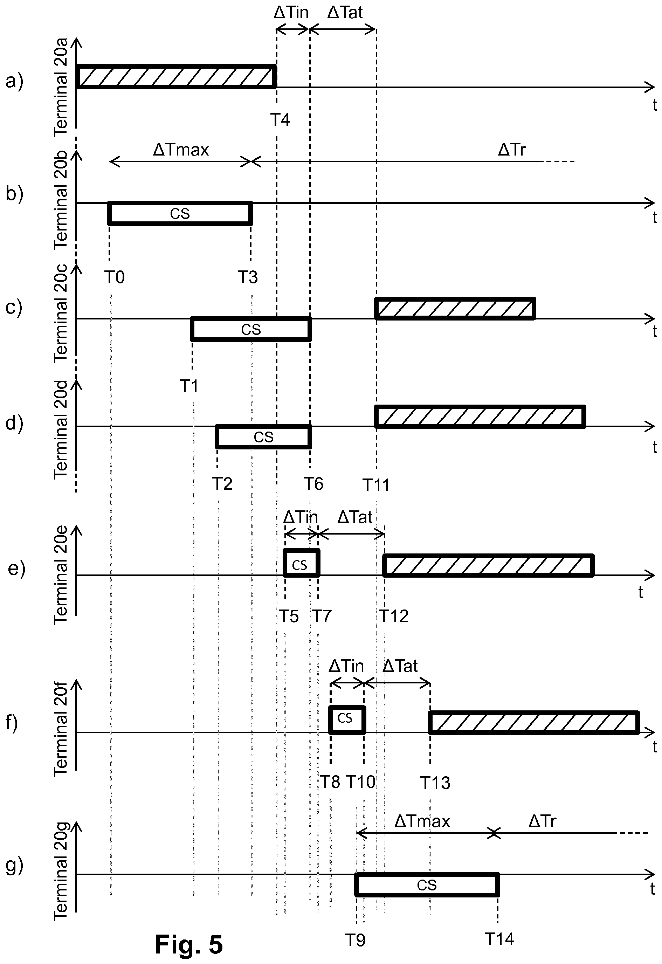

La figure 5 représente des diagrammes temporels illustrant le principe de fonctionnement d'un procédé 50 d'émission. Dans l'exemple illustré par la figure 5, on se place de manière non limitative dans le cas où la durée d'écoute est limitée à la durée maximale d'écoute ΔTmax, et où chaque terminal 20 émet après avoir détecté une absence d'activité de durée égale à la durée d'inactivité ΔTin et après avoir attendu pendant une durée supplémentaire égale à la durée d'attente ΔTat.

Plus particulièrement, la figure 5 comporte sept parties, de a) à g), qui représentent les comportements de sept terminaux 20a à 20g. Pour chacun de ces terminaux, une zone hachurée correspond à un intervalle temporel d'émission d'un message, et une zone désignée par « CS » correspond à un intervalle temporel d'écoute du canal de communication.

Tel qu'illustré par la partie a) la figure 5, on se place de manière non limitative dans le cas où le terminal 20a est initialement en cours d'émission d'un message sur le canal de communication, et l'émission du message par le terminal 20a prend fin à un instant T4.

Tel qu'illustré par la partie b) de la figure 5, à un instant T0 inférieur à T4, le terminal 20b commence à écouter le canal de communication en vue d'émettre un message. A un instant T3, qui correspond à (T0 + ΔTmax) et qui est inférieur à T4, le terminal 20b interrompt l'écoute du canal de communication, qui est toujours occupé par le terminal 20a. Par exemple, le terminal 20b peut essayer d'écouter à nouveau le canal de communication après expiration de la durée de report d'écoute ΔTr.

Tel qu'illustré par la partie c) de la figure 5, le terminal 20c commence à écouter le canal de communication, en vue d'émettre un message, à un instant T1. L'instant T1 est tel que (T1 + ΔTmax) est supérieur à (T4 + ΔTin), de sorte que le terminal 20c détecte la fin de l'activité sur le canal de communication à l'instant T4, et une absence d'activité de durée ΔTin à un instant T6 qui correspond à (T4 + ΔTin). Le terminal 20c commence à émettre son message à partir de l'instant T11 (T6 + ΔTat).

Tel qu'illustré par la partie d) de la figure 5, le terminal 20d commence à écouter le canal de communication, en vue d'émettre un message, à un instant T2 (T2 > T1). L'instant T2 est tel que (T2 + ΔTmax) est supérieur à (T4 + ΔTin), de sorte que le terminal 20d détecte la fin de l'activité sur le canal de communication à l'instant T4, et une absence d'activité de durée ΔTin à l'instant T6. Comme le terminal 20c, le terminal 20d commence à émettre son message à partir de l'instant T11 (T6 + ΔTat).

Tel qu'illustré par la partie e) de la figure 5, le terminal 20e commence à écouter le canal de communication, en vue d'émettre un message, à un instant T5 (T4 < T5 < T6). L'instant T5 est tel que (T5 + ΔTin) est inférieur à T11 et inférieur à (T5 + ΔTmax), de sorte que le terminal 20e détecte une absence d'activité de durée ΔTin à l'instant T7 (T5 + ΔTin). Le terminal 20e commence à émettre son message à partir de l'instant T12 (T7 + ΔTat).

Tel qu'illustré par la partie f) de la figure 5, le terminal 20f commence à écouter le canal de communication, en vue d'émettre un message, à un instant T8 (T6 < T8 < T11). L'instant T8 est tel que (T8 + ΔTin) est inférieur à T11 et inférieur à (T8 + ΔTmax), de sorte que le terminal 20f détecte une absence d'activité de durée ΔTin à l'instant T10 (T8 + ΔTin). Le terminal 20f commence à émettre son message à partir de l'instant T13 (T10 + ΔTat).

Tel qu'illustré par la partie g) de la figure 5, le terminal 20g commence à écouter le canal de communication, en vue d'émettre un message, à un instant T9 (T9 < T11). L'instant T9 est tel que (T9 + ΔTin) est supérieur à T11. A un instant T14, qui correspond à (T9 + ΔTmax), le terminal 20g n'a pas réussi à détecter une absence d'activité de durée ΔTin et il interrompt l'écoute du canal de communication. Par exemple, le terminal 20g peut essayer d'écouter à nouveau le canal de communication après expiration de la durée de report d'écoute ΔTr. Il est à noter que, si la valeur de ΔTmax avait été choisie supérieure à (ΔTmsg + 2 x ΔTin + ΔTat), alors le terminal 20g aurait pu émettre son message au plus près de la fin de l'émission du terminal 20f.

Ainsi, tel qu'illustré par la figure 5, les terminaux 20c et 20d émettent leur message simultanément. En outre, les terminaux 20e et 20f émettent leur message de manière quasiment simultanée par rapport aux terminaux 20c et 20d, ce qui n'aurait pas été le cas sans l'utilisation de la durée d'attente ΔTat. Etant donné que les terminaux 20a à 20g sont, dans l'exemple considéré, multiplexés en fréquences, les messages émis simultanément n'interfèrent pas entre eux. On comprend donc que le procédé 50 d'émission permet d'améliorer l'efficacité de l'utilisation de canal de communication tout en respectant la contrainte d'écoute avant émission.

Une telle amélioration est obtenue en partie grâce au fait que les terminaux 20, lorsqu'ils détectent une activité sur le canal de communication, persistent à écouter le canal de communication jusqu'à détecter une absence d'activité de durée égale à la durée d'inactivité ΔTin.

Un tel fonctionnement peut, dans certains cas, s'accompagner d'une consommation électrique des terminaux 20 selon l'invention plus importante que la consommation électrique des terminaux qui interrompent leur écoute du canal de communication dès qu'une activité est détectée. Toutefois, les inventeurs ont constaté que, lorsque le nombre de terminaux est important, la consommation électrique des terminaux 20 selon l'invention (avec écoute sans interruption) est réduite en moyenne par rapport à celle des terminaux qui font une écoute avec interruption. En effet, dans le cas d'un grand nombre de terminaux, les terminaux qui font une écoute avec interruption tendent à interrompre beaucoup plus souvent l'écoute du canal de communication et à réessayer de nombreuses fois à écouter après avoir attendu pendant la durée de report d'écoute. Avec un grand nombre de terminaux, la durée d'écoute cumulée nécessaire à un terminal qui fait une écoute avec interruption pour émettre un message tend à être supérieure à la durée d'écoute nécessaire dans le cas de l'invention, puisque les terminaux 20 selon l'invention tendent à écouter une seule fois le canal de communication, pendant une durée d'écoute généralement inférieure à la durée maximale des messages émis par lesdits terminaux 20.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant principalement le cas où les messages émis par les terminaux 20 sont à bande ultra étroite, ce qui est particulièrement avantageux pour des applications du type M2M ou IoT. Rien n'exclut cependant, suivant d'autres exemples, de considérer l'émission de messages qui ne seraient pas à bande ultra étroite.

En outre, l'invention a été décrite en considérant principalement un multiplexage fréquentiel des terminaux 20 sur le canal de communication. Rien n'exclut cependant, suivant d'autres exemples, de considérer d'autres techniques de multiplexage des terminaux 20 sur le canal de communication, alternativement ou en complément au multiplexage fréquentiel. En particulier, l'invention est également applicable au cas où les terminaux 20 sont multiplexés par différents codes d'étalement (« Code Division Multiple Access » ou CDMA dans la littérature anglo-saxonne). Dans un tel cas, l'émission d'un message par un terminal 20 comporte l'étalement du spectre dudit message au moyen d'un code d'étalement prédéterminé pour ledit terminal 20, distinct des codes d'étalement des autres terminaux 20 du système 10 de communication sans fil. Les codes d'étalement considérés sont par exemple des M-séquences, des séquences de Gold, etc.

L'invention a également été décrite en considérant le cas où le canal de communication correspond au lien montant entre des terminaux 20 et un réseau d'accès 30. Rien n'exclut cependant, suivant d'autres exemples, de considérer un autre canal de communication, comme par exemple un canal de communication utilisé par les terminaux 20 pour communiquer directement entre eux, sans avoir à passer par l'intermédiaire d'un réseau d'accès.

## Revendications

1. Procédé (50) d'émission, par un terminal (20) d'un système (10) de communication sans fil, d'un message sur un canal de communication partagé avec d'autres terminaux (20), ledit procédé (50) comportant :

   - avant d'émettre ledit message: une étape (51) d'écoute sans interruption du canal de communication par ledit terminal (20) jusqu'à détecter une absence d'activité sur le canal de communication pendant une durée prédéterminée, dite « durée d'inactivité ΔTin »,
   - lorsqu'aucune activité n'est détectée sur ledit canal de communication pendant la durée d'inactivité ΔTin : une étape (52) d'émission dudit message sur le canal de communication,

   les terminaux (20) étant multiplexés en fréquences et/ou par différents codes d'étalement sur ledit canal de communication, **caractérisé en ce que** après avoir détecté une absence d'activité sur le canal de communication pendant la durée d'inactivité ΔTin, ledit procédé (50) comporte une étape (54) d'attente, pendant une durée prédéterminée identique pour tous les terminaux (20) du système (10) de communication sans fil, dite «durée d'attente ΔTat », avant d'émettre le message.

2. Procédé (50) selon la revendication 1, dans lequel le terminal (20) interrompt l'écoute du canal de communication lorsqu'aucune absence d'activité de durée égale à la durée d'inactivité ΔTin n'est détectée pendant une durée prédéterminée, dite « durée maximale d'écoute ΔTmax », ladite durée maximale d'écoute ΔTmax étant significativement supérieure à ladite durée d'inactivité ΔTin.

**3.** Procédé (50) selon la revendication 2, dans lequel la durée maximale d'écoute ΔTmax est supérieure à une durée maximale des messages émis par les terminaux (20) du système de communication sans fil.

**4.** Procédé (50) selon l'une des revendications 2 à 3, dans lequel la durée maximale d'écoute ΔTmax est égale ou supérieure à 2 secondes.

**5.** Procédé (50) selon l'une des revendications précédentes, dans lequel la durée d'attente ΔTat est égale ou supérieure à la durée d'inactivité ΔTin.

**6.** Procédé (50) selon l'une des revendications précédentes, dans lequel le message à émettre par le terminal (20) est un message à bande ultra étroite.

**7.** Procédé (50) selon l'une des revendications précédentes, dans lequel l'émission (52) du message comporte la sélection de manière aléatoire, par ledit terminal (20), d'une fréquence centrale d'émission dudit message à l'intérieur d'une bande fréquentielle partagée avec les autres terminaux.

**8.** Procédé (50) selon l'une des revendications précédentes, dans lequel l'émission (52) du message comporte l'étalement du spectre dudit message au moyen d'un code d'étalement prédéterminé.

**9.** Terminal (20) d'un système (10) de communication sans fil, comportant des moyens configurés pour mettre en œuvre les étapes d'un procédé (50) d'émission selon l'une des revendications précédentes.

**10.** Système (10) de communication sans fil, comportant une pluralité de terminaux (20) selon la revendication 9.

**11.** Système (10) selon la revendication 10, comportant un réseau d'accès (30) comportant une pluralité de stations de base (31), le canal de communication correspondant à un lien montant depuis les terminaux (20) vers ledit réseau d'accès (30).

**Patentansprüche**

**1.** Verfahren (50) zum Senden einer Nachricht durch ein Endgerät (20) eines drahtlosen Kommunikationssystems (20) auf einem mit anderen Endgeräten (20) gemeinsam genutzten Kommunikationskanal, wobei das Verfahren (50) Folgendes beinhaltet:

- vor dem Senden der Nachricht: einen Schritt (51) des Anhörens ohne Unterbrechung des Kommunikationskanals durch das Endgerät (20) bis zum Detektieren einer fehlenden Aktivität auf dem Kommunikationskanal während einer vorbestimmten Dauer, die "Inaktivitätsdauer ΔTin" genannt wird,
- wenn auf dem Kommunikationskanal während einer Inaktivitätsdauer ΔTin keine Aktivität detektiert wird: einen Schritt (52) des Sendens der Nachricht auf dem Kommunikationskanal,

wobei die Endgeräte (20) in Frequenzen und/ oder durch unterschiedliche Spreizungscodes auf dem Kommunikationskanal gemultiplext werden, **dadurch gekennzeichnet, dass** das Verfahren (50), nachdem es eine fehlende Aktivität auf dem Kommunikationskanal während einer Inaktivitätsdauer ΔTin detektiert hat, einen Warteschritt (54) während einer identischen vorbestimmten Dauer für alle Endgeräte (20) des drahtlosen Kommunikationssystems (10) beinhaltet, die "Wartedauer ΔTat" genannt wird, bevor die Nachricht gesendet wird.

**2.** Verfahren (50) nach Anspruch 1, wobei das Endgerät (20) das Anhören des Kommunikationskanals unterbricht, wenn keine fehlende Aktivität einer Dauer gleich der Inaktivitätsdauer ΔTin während einer vorbestimmten Dauer detektiert wird, die "maximale Anhördauer ΔTmax" genannt wird, wobei die maximale Anhördauer ΔTmax signifikant größer ist, als die Inaktivitätsdauer ΔTin.

**3.** Verfahren (50) nach Anspruch 2, wobei die maximale Anhördauer ΔTmax größer als eine maximale Dauer der Nachrichten ist, die von den Endgeräten (20) des drahtlosen Kommunikationssystems gesendet werden.

**4.** Verfahren (50) nach einem der Ansprüche 2 bis 3, wobei die maximale Anhördauer ΔTmax gleich oder größer als 2 Sekunden ist.

**5.** Verfahren (50) nach einem der vorstehenden Ansprüche, wobei die Wartedauer ΔTat gleich oder größer als die Inaktivitätsdauer ΔTin ist.

**6.** Verfahren (50) nach einem der vorstehenden Ansprüche, wobei die durch das Endgerät (20) zu sendende Nachricht eine Ultra-Schmalband-Nachricht ist.

**7.** Verfahren (50) nach einem der vorstehenden Ansprüche, wobei das Senden (52) der Nachricht die zufällige Auswahl, durch das Endgerät (20), einer zentralen Sendefrequenz der Nachricht innerhalb eines mit den anderen Endgeräten gemeinsam genutzten Frequenzbandes beinhaltet.

8. Verfahren (50) nach einem der vorstehenden Ansprüche, wobei das Senden (52) der Nachricht das Spreizen des Spektrums der Nachricht anhand eines vorbestimmten Spreizcodes beinhaltet.

9. Endgerät (20) eines drahtlosen Kommunikationssystems (10), das Mittel beinhaltet, die konfiguriert sind, um die Schritte eines Verfahrens (50) zum Senden nach einem der vorstehenden Ansprüche umzusetzen.

10. Drahtloses Kommunikationssystem (10), das eine Vielzahl von Endgeräten (20) nach Anspruch 9 beinhaltet.

11. System (10) nach Anspruch 10, ein Zugangsnetzwerk (30) beinhaltend, das eine Vielzahl von Basisstationen (31) beinhaltet, wobei der Kommunikationskanal einer Aufwärtsverbindung von den Endgeräten (20) zu dem Zugangsnetzwerk (30) entspricht.


**Claims**

1. Method (50) of sending, by a terminal (20) of a wireless communication system (10), a message on a communication channel shared with other terminals (20), said method (50) comprising:

   - before sending said message: a step (51) of listening without interruption to the communication channel by said terminal (20) until it detects an absence of activity on the communication channel for a predetermined time, termed the "inactivity time $\Delta$Tin",
   - when no activity is detected on said communication channel for the inactivity time $\Delta$Tin: a step (52) of sending said message on the communication channel,

   the terminals (20) being multiplexed in frequency and/or by different spreading codes on said communication channel, **characterized in that** after having detected an absence of activity on the communication channel during the inactivity time $\Delta$Tin, said method (50) comprises a step (54) of waiting, for an identical predetermined time for all of the terminals (20) of the wireless communication system (10), termed the "waiting time $\Delta$Tat", before sending the message.

2. Method (50) according to claim 1, wherein the terminal (20) interrupts the listening of the communication channel when no absence of activity of a duration equal to the inactivity time $\Delta$Tin is detected for a predetermined time, termed the "maximum listening time $\Delta$Tmax", said maximum listening time $\Delta$Tmax being substantially greater than said inactivity time $\Delta$Tin.

3. Method (50) according to claim 2, wherein the maximum listening time $\Delta$Tmax is greater than a maximum duration of the messages sent by the terminals (20) of the wireless communication system.

4. Method (50) according to one of claims 2 to 3, wherein the maximum listening time $\Delta$Tmax is greater than or equal to 2 seconds.

5. Method (50) according to one of the preceding claims, wherein the waiting time $\Delta$Tat is greater than or equal to the inactivity time $\Delta$Tin.

6. Method (50) according to one of the preceding claims, wherein the message to be sent by the terminal (20) is an ultra-narrow band message.

7. Method (50) according to one of the preceding claims, wherein the sending (52) of the message comprises a random selection, by said terminal (20), of a central frequency for sending said message inside a frequency band shared with the other terminals.

8. Method (50) according to one of the preceding claims, wherein the sending (52) of the message comprises the spreading of the spectrum of said message with a predetermined spreading code.

9. Terminal (20) of a wireless communication system (10) comprising means configured to implement the steps of a method (50) for sending according to one of the preceding claims.

10. System (10) for wireless communication comprising a plurality of terminals (20) according to claim 9.

11. System (10) according to claim 10, comprising an access network (30) comprising a plurality of base stations (31), with the communication channel corresponding to an uplink from the terminals (20) to said access network (30).

**Fig. 1**

Message à émettre

Ecoute du
canal de
communication

510

511

Emission du message sur le
canal de communication

**Fig. 2**

EP 3 398 394 B1

Message à émettre

531

50

Ecoute du
canal de
communication

510

Durée d'écoute
≥ ΔTmax?

51

53

511

530

Emission du message sur le
canal de communication

Interruption de l'écoute

52

**Fig. 3**

Message à émettre

50

Ecoute du
canal de
communication

510

51

511

Attente de durée ΔTat

54

Emission du message sur le
canal de communication

52

**Fig. 4**

**Fig. 5**

**EP 3 398 394 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2012040520 A1
- US 2015124785 A1